# EUROPÄISCHE PATENTSCHRIFT

(11) **EP 3 195 771 B1**
(45) Veröffentlichungstag und Bekanntmachung des Hinweises auf die Patenterteilung: **16.05.2018**
(21) Anmeldenummer: 16203013.4
(22) Anmeldetag: 08.12.2016
(51) Int. Cl.: A47J 43/25

(54) **VIERKANTREIBE**
BOX GRATER
RÂPE À QUATRE FACES

(30) Priorität: 20.01.2016 DE 102016200684
(43) Veröffentlichungstag der Anmeldung: 26.07.2017
(73) Patentinhaber: WMF Group GmbH, 73312 Geislingen/Steige (DE)
(72) Erfinder: Abele, Werner, 89558 Böhmenkirch (DE)

(56) Entgegenhaltungen:
- DE-A1-102012 211 360
- GB-A- 189 827 111
- JP-U- S51 117 749
- US-A- 4 928 893

## Beschreibung

Die vorliegende Erfindung betrifft eine Vierkantreibe mit einem Reibkörper mit Reibflächen zum Abreiben von Reibgut, insbesondere zum Abreiben von Lebensmitteln, gemäß dem Oberbegriff des Anspruchs 1. Eine derartige Vierkantreibe ist aus der Druckschrift DE-A-10 2012 211360 bekannt. Sogenannte Vierkantreiben sind in heutigen Haushalten weit verbreitet und dienen zur einfachen und gleichzeitig rationellen Herstellung von Reibgut, beispielsweise zur Herstellung von geriebenem Käse zum Überbacken von Lebensmitteln. Herkömmliche Vierkantreiben besitzen üblicherweise eine obeliskartige Gestalt und werden zum Gebrauch hochkant aufgestellt. Während des Reibvorgangs fällt somit das geriebene Reibgut in den Innenraum der stehenden Vierkantreibe, wobei ein Auffangen des Reibgutes üblicherweise durch ein unter der Vierkantreibe aufgestelltes Gefäß, beispielsweise einen Teller, erfolgt. Die konische Form bekannter Vierkantreiben unterstützt dabei das Herabfallen des geriebenen Reibgutes an einer überhängenden Innenseite der Vierkantreibe. Nachteilig bei den bekannten Vierkantreiben sind jedoch deren zum Teil wackeliger Stand und das vergleichsweise schwierige Auffangen des Reibgutes.

Die vorliegende Erfindung beschäftigt sich mit dem Problem, für eine Vierkantreibe der gattungsgemäßen Art eine verbesserte Ausführungsform anzugeben, die sich insbesondere durch eine deutlich vereinfachte Handhabung auszeichnet. Dieses Problem wird erfindungsgemäß durch den Gegenstand des unabhängigen Patentanspruchs 1 gelöst. Vorteilhafte Ausführungsformen sind Gegenstand der abhängigen Ansprüche.

Die vorliegende Erfindung beruht auf dem allgemeinen Gedanken, eine an sich bekannte Vierkantreibe mit einem Reibkörper mit zumindest vier, im Wesentlichen orthogonal zueinander ausgerichteten Reibflächen und einem rohrförmigen Querschnitt mit einem Behälter zu versehen, der zum Auffangen von Reibgut während des Reibvorgangs in die Vierkantreibe eingeschoben werden kann und der zugleich eine entnehmbare Frontwand aufweist, welche in entnommenem Zustand ein erleichtertes Entleeren des Behälters ermöglicht wird. Durch die entnehmbare Frontwand steht darüber hinaus unmittelbar ein Schieber zur Verfügung, der zum Herausschieben des Reibgutes aus dem Behälter genutzt werden kann, wobei in diesem Fall lediglich die herausgenommene Frontwand in leicht schrägem Zustand am anderen Längsende in den Behälter eingesetzt und in Richtung der frontseitigen Öffnung verschoben werden muss. Hierdurch ist es insbesondere auch möglich, feuchtes Reibgut, wie beispielsweise Karotten, vollständig und zugleich leicht aus dem Behälter zu entfernen, was ohne die erfindungsgemäße entnehmbare Frontwand bei einem einfachen auf den Kopf stellen des Behälters so nicht möglich wäre. Zur Verwendung der Vierkantreibe wird somit der zunächst leere Behälter mit eingesetzter Frontwand in den Reibekörper der Vierkantreibe eingeschoben bzw. der Reibkörper mit seinen zumindest vier Reibflächen auf den Behälter aufgeschoben. Anschließend wird das Reibgut über die im Wesentlichen horizontal oberhalb des Behälters angeordnete Reibfläche gerieben und gelangt beim Durchtritt durch diese Reibfläche nach unten in den darunter angeordneten Behälter. Nach Abschluss des Reibvorganges kann der Behälter aus dem Reibkörper der Vierkantreibe herausgezogen werden, wobei durch die in den Behälter eingesetzte Frontwand zugleich ein Abstreifen von noch unten an der Reibfläche hängendem Reibgut bewirkt werden kann. Hierzu kann an einer Oberseite der Frontwand beispielsweise eine entsprechende Abziehlippe angeordnet sein. Ist der Behälter aus dem Reibkörper herausgezogen, kann er durch ein einfaches Entnehmen der Frontwand und ein Benutzen derselben als Schieber über die von der Frontwand freigegebene frontseitige Öffnung entleert werden. Die Frontwand kann dabei nicht nur an einer oberen Kante eine derartige Abziehlippe aufweisen, sondern auch an den anderen Seiten, insbesondere sogar umlaufend, so dass bei Benutzung der entnommenen Frontwand als Schieber, der Behälter äußerst sauber und vorzugsweise ohne Rückstände entleert werden kann. Mit einem derartigen Behälter lässt sich das Handling einer derartigen Vierkantreibe deutlich vereinfachen, was eine nicht zu unterschätzende Komfortsteigerung für einen Anwender bedeutet.

Bei einer vorteilhaften Weiterbildung der erfindungsgemäßen Lösung weisen der Reibkörper eine Rastkontur und der Behälter eine damit zusammenwirkende und lösbare Rasteinrichtung, beispielsweise einen betätigbaren Rasthaken, auf. Durch die Rasteinrichtung und die damit zusammenwirkende reibkörperseitige Rastkontur kann der Reibkörper in auf dem Behälter aufgeschobenen Zustand arretiert werden, wodurch die gesamte Vierkantreibe mit eingeschobenem Behälter einfach über den am Behälter angeordneten stirnseitigen Griff bewegt bzw. gehalten werden kann. Auch können durch eine derartige Rastkontur und die damit zusammenwirkende Rasteinrichtung eine unbeabsichtigte Relativbewegung zwischen dem Reibkörper und dem Behälter während des Reibvorgangs vermieden werden. Eine derartige Rasteinrichtung kann insbesondere in der Art eines einfachen zum Entriegeln niederdrückbaren Rasthakens gebildet sein, so dass die Rasteinrichtung zusammen mit dem übrigen Behälter als kostengünstiges, einstückiges Kunststoffspritzgussteil hergestellt werden kann.

Bei einer vorteilhaften Weiterbildung der erfindungsgemäßen Lösung weist der Reibkörper der Vierkantreibe längsendseitig eine umlaufende Einfassung aus rutschhemmendem Material auf, so dass der Reibkörper im Gebrauchszustand über die Einfassung auf einer Unterlage aufliegt. Zusätzlich ist denkbar, dass der Behälter im Bereich seines Griffes eine Auflagekontur aus rutschhemmendem Material aufweist, wobei in diesem Fall der Behälter im Gebrauchszustand über die Auflagekontur auf der Unterlage aufliegt. Insgesamt kann somit die Vierkantreibe im Gebrauchszustand über die Einfassung einerseits und über die Auflagekontur andererseits standsicher und rutschfest auf der Unterlage, beispielsweise einem Tisch, abgestellt werden. Die Außenabmessungen der Einfassung sind dabei größer als die Außenabmessungen des Reibkörpers bzw. der vier im Wesentlichen orthogonal miteinander verbundenen Reibflächen, so dass keine der Reibflächen beim Ablegen der Vierkantreibe auf der Unterlage mit dieser in Kontakt tritt und dadurch unter Umständen beschädigt wird. Als Material für die Einfassung des Reibkörpers bzw. die Auflagekontur des Behälters kommt beispielsweise Silikon oder ein thermoplastisches Elastomer (TPE) in Frage, wobei derartige Werkstoffe einerseits sowohl spülmaschinenfest als auch leicht zu reinigen und langlebig sind. Durch die Ausbildung der Einfassung aus Kunststoff lassen sich zudem farbliche Akzente setzen, so dass beispielsweise unterschiedliche Varianten mit unterschiedlichen Reibflächen bzw. Reibmustern, farblich voneinander unterschieden werden können.

Um dabei ein möglichst breites Anwendungsspektrum der Vierkantreibe erreichen zu können, weisen alle Reibflächen ein unterschiedliches Reibbild bzw. Reibmuster auf, so dass mit der einen Reibfläche beispielsweise Raspeln und mit der anderen beispielsweise Scheiben geschnitten bzw. erzeugt werden können. Ebenfalls denkbar ist, dass auf einer Reibfläche zwei verschiedene Reibmuster in Axialrichtung versetzt zueinander angeordnet sind.

Bei einer vorteilhaften Weiterbildung der erfindungsgemäßen Lösung sind die Reibflächen konvex ausgebildet. Durch eine derartige konvexe Ausbildung der Reibflächen besitzt der Querschnitt des Reibkörpers zwar immer noch eine viereckige, jedoch leicht ballige Form. Durch die konvexen Reibflächen ist es insbesondere auch möglich, diese an lediglich einer einzigen Stelle bzw. in einem einzigen Bereich zu verwenden und nicht wie bei planen Reibflächen ein Reiben über die gesamte Breite des Reibgutes gleichzeitig zu bewirken. Derartige konvexe Reibflächen erleichtern insbesondere das Reiben von hartem Reibgut, wie beispielsweise einer Muskatnuss.

Bei einer weiteren vorteilhaften Ausführungsform der erfindungsgemäßen Lösung weist der Behälter zumindest in zwei Seitenwänden jeweils eine Nut auf, in welchen die Frontwand geführt ist. Ein Entnehmen bzw. Einsetzen der Frontwand in den Behälter ist somit über ein einfaches Einstecken in die Nuten des Behälters möglich. Eine Halterung der Frontwand in den Nuten kann dabei wahlweise über die Frontwand selber erfolgen, oder aber über an deren Außenrand angeordnete Abziehlippen, welche bei in dem Behälter eingebauten Zustand in den Nuten angeordnet sind und bei der Verwendung der Frontwand als Schieber ein Abziehen einer Behälterinnenfläche und damit ein besonders sauberes und restefreie Entfernen des Reibgutes aus dem Behälter ermöglichen.

Zweckmäßig weisen die Vierkantreibe und der zugehörige Behälter eine konische Form auf, wobei sich der Behälter vom Griff zur Frontwand hin verjüngt. Durch eine derartige konische Form kann ein sogenanntes Poka-Yoke-System geschaffen werden, welches eine Montage des Reibkörpers auf dem Behälter in nur einer einzigen, nämlich richtigen, Position erlaubt. Die konische Form erleichtert darüber hinaus das Entnehmen des Behälters aus dem Reibkörper.

Durch eine Ausbildung der Reibfläche aus Keramik bzw. eine Beschichtung derartiger Reibflächen mit Keramik kann zudem eine hohe Schnitt- bzw. Reibleistung auch langfristig gewährleistet und dadurch ein äußerst hochwertiges Produkt hergestellt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch
- Fig. 1: eine erfindungsgemäße Vierkantreibe in einer ersten Ansicht,
- Fig. 2: eine Darstellung wie in Fig. 1, jedoch in einer zweiten Ansicht,
- Fig. 3: eine Explosionsdarstellung der erfindungsgemäßen Vierkantreibe,
- Fig. 4: ein Behälter der Vierkantreibe mit entnommener Frontwand,
- Fig. 5: der Behälter mit darin als Schieber zum Entfernen von Reibgut einge-setzter Frontwand.

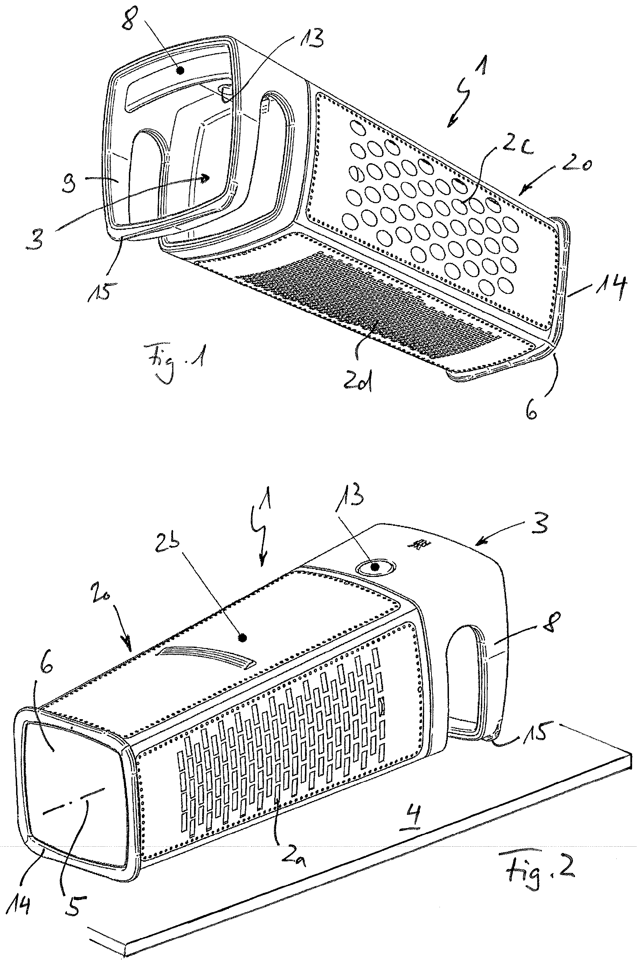

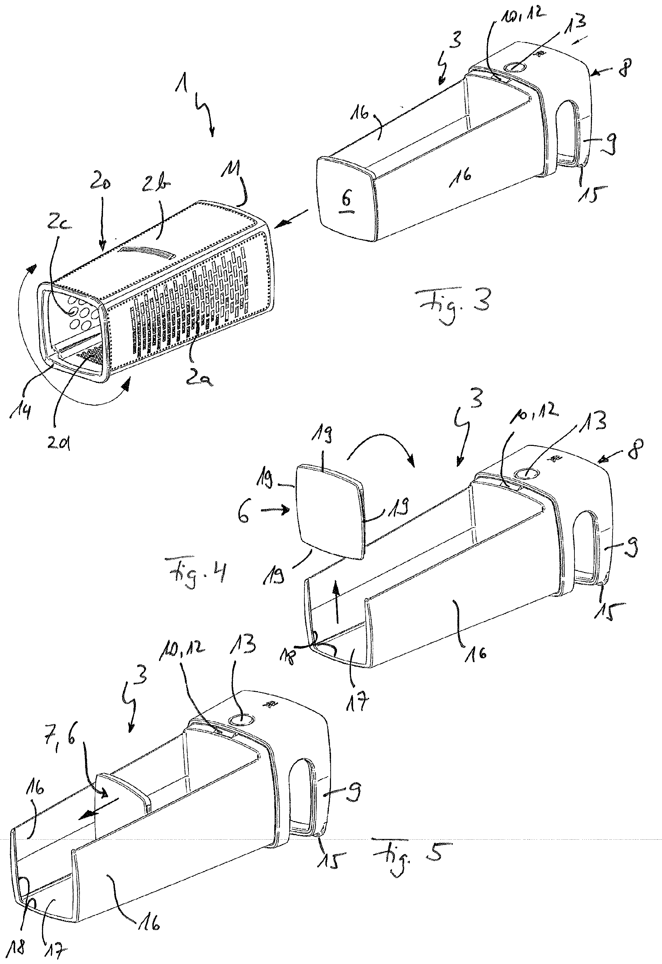

Entsprechend den Fig. 1-3, weist eine erfindungsgemäße Vierkantreibe 1 einen Reibkörper 20 mit zumindest vier im Wesentlichen orthogonal zueinander ausgerichteten Reibflächen 2a, 2b, 2c und 2d zum Reiben von Reibgut, insbesondere zum Reiben von Lebensmitteln, wie beispielsweise Käse, Obst oder Gemüse, auf. Der Reibkörper 20 der Vierkantreibe 1 besitzt dabei einen rohrförmigen Querschnitt, in welchen der Behälter 3 (vergleiche insbesondere auch die Figuren 4 und 5) einschiebbar ist. Der Behälter 3 dient dabei zum Auffangen von über eine jeweils darüber angeordnete Reibfläche 2a, 2b, 2c oder 2d geschnittenem Reibgut. Im Betrieb der Vierkantreibe 1 liegt diese üblicherweise auf einer Unterlage 4 auf, kann aber alternativ auch schräg gehalten werden. Durch ein Verdrehen des Reibkörpers 20 und damit der der Reibflächen 2a, 2b, 2c und 2d um eine Achse 5 kann zwischen einzelnen Reibflächen 2a bis 2d mit unterschiedlichen Reibmustern gewählt werden. So weist die Reibfläche 2b beispielsweise lediglich eine einzige Schneide 6 auf und ist daher zum Herstellen von scheibenförmigen Schnittgut bzw. Reibgut geeignet. Demgegenüber weisen die Reibflächen 2c, 2a und 2d mehrere unterschiedlich große Schneiden auf, wodurch fein geraspeltes oder eher grob geraspeltes Reibgut hergestellt werden kann.

Erfindungsgemäß weist nun der Behälter 3 eine entnehmbare Frontwand 6 auf, welche bei in dem Behälter 3 eingebautem Zustand diesen frontendseitig abschließt und welche in entnommenem Zustand (vergleiche insbesondere die Fig. 5) als Schieber 7 zum Herausschieben von in dem Behälter 3 aufgefangenem Reibgut über die durch entnommene Frontwand 6 freigegebene Auslassöffnung. Durch die entnehmbare Frontwand 6 kann ein deutlich erleichtertes Entleeren des Behälters 3 ermöglicht werden, da die Frontwand 6 zugleich als Schieber zum Entfernen des Reibgutes aus dem Behälter 3 verwendet werden kann. Dies ist insbesondere bei feuchtem Reibgut, wie beispielsweise Gurkenscheiben oder Karottenraspel, von besonderem Vorteil, da ein derart feuchtes Reibgut aufgrund von Adhäsionskräften im Behälter 3 festgehalten wird und selbst bei einem Überkopfdrehen des Behälters 3 unter Umständen nicht von selbst aus diesem heraus fällt.

Betrachtet man den Behälter 3 weiter, so kann man erkennen, dass dieser einen stirnseitigen Griff 8 aufweist, welcher zum einen ein ergonomisch günstiges Halten der Vierkantreibe 1 bzw. des Behälters 3 ermöglicht und es darüber hinaus erlaubt, die erfindungsgemäße Vierkantreibe 1 beispielsweise an einer Haltestange in der Küche aufzuhängen, wozu in diesem Fall der Griff 8 einen Haltebügel 9 aufweist.

Um den Behälter 3 in dem Reibkörper 20 der Vierkantreibe 1 fixieren und damit im Betrieb gegen eine unerwünschte Relativbewegung sichern zu können, weisen der Reibkörper 20 eine Rastkontur 11 und der Behälter 3 eine damit zusammenwirkende und lösbare Rasteinrichtung 10 auf. Die Rasteinrichtung 10 kann dabei als einfacher, niederdrückbarer Rasthaken 12 ausgebildet sein, welcher über ein entsprechendes Betätigungselement 13 niedergedrückt wird. In einem besonders bevorzugten Fall ist dabei die Rasteinrichtung 10 einstückig mit dem Behälter 3, insbesondere als einstückiges Kunststoffspritzgussteil, ausgebildet.

Betrachtet man die Vierkantreibe 1 näher, so kann man erkennen, dass dessen Reibkörper 20 längsendseitig eine umlaufende Einfassung 14 aus rutschhemmendem Material aufweist, so dass die Vierkantreibe 1 im Gebrauchszustand über die Einfassung 14 auf der Unterlage 4 rutschfest abstellbar ist. In ähnlicher Weise kann auch der Behälter 3 im Bereich seines Griffes 8 eine Auflagekontur 15 aus rutschhemmendem Material aufweisen, so dass auch der Behälter 3 im Gebrauchszustand über die Auflagekontur 15 rutschhemmend auf der Unterlage 4 aufliegt. Das rutschhemmende Material für die Einfassung 14 und/oder die Auflagekontur 15 kann dabei aus Kunststoff, insbesondere aus Silikon oder einem thermoplastischen Elastomer (TPE) ausgebildet sein.

Betrachtet man den Behälter 3 und den Reibkörper 20 weiter, so kann man erkennen, dass diese eine konische Form aufweisen, wobei sich der Behälter 3 vom Griff 8 zur Frontwand 6 hin verjüngt. Dies ermöglicht ein sogenanntes Poka-Yoke-System, welches lediglich eine einzige Montagerichtung bzw. Einschieberichtung des Behälters 3 in den Reibkörper 20 erlaubt.

Die Reibflächen 2a bis 2d sind dabei zumindest teilweise aus Metall, insbesondere aus Edelstahl, oder aber aus Keramik ausgebildet oder mit Keramik beschichtet, wodurch in allen genannten Fällen eine hohe Lebenserwartung eine hohe über die Lebenserwartung gleichbleibende Schneidleistung erreicht werden können.

Betrachtet man den Behälter 3 in den Fig. 4 und 5, so kann man erkennen, dass dieser zumindest in zwei Seitenwänden 16, aber auch in einem Boden 17 jeweils eine Nut 18 aufweist, in welcher die Frontwand 6 geführt ist. Die Frontwand 6 kann dabei mit ihrem Außenrand direkt in der zugehörigen Nut 18 des Behälters 3 geführt sein, oder aber an dem Außenrand der Frontwand 6 sind Abziehlippen 19 angebracht, insbesondere angespritzt, über welche zum einen eine Fixierung der Frontwand 6 in den Nuten 18 des Behälters 3 erfolgt und welche zum anderen zu einem sauberen Entfernen des im Behälter 3 aufgefangenen Reibgutes genutzt werden können, sofern die Frontwand 6 als Schieber 7 verwendet wird. Eine derartige Abziehlippe 19 ermöglicht auch ein Abstreifen von noch unten an der jeweiligen benutzten Reibfläche 2a bis 2d hängendem Reibgut beim Herausziehen des Behälters 3 aus dem Reibkörper 20.

Mit der erfindungsgemäß Frontwand 6 am Behälter 3 lässt sich eine deutliche Komfortsteigerung bei der Verwendung der erfindungsgemäßen Vierkantreibe 1 erreichen, da der Behälter 3 durch ein Herausnehmen der Frontwand 6 und ein Verwenden derselben als Schieber 7 einfach und zugleich sauber entleert werden kann.

## Patentansprüche

1. Vierkantreibe (1)
- mit einem Reibkörper (20) mit zumindest vier im Wesentlichen orthogonal zueinander ausgerichteten Reibflächen (2a,2b,2c,2d) zum Abreiben von Reibgut, insbesondere von Lebensmitteln, wie beispielsweise Käse, Obst oder Gemüse,
- mit einem Behälter (3) zum Auffangen des Reibguts,
- wobei der Reibkörper (20) einen rohrförmigen Querschnitt aufweist, in welchen der Behälter (3) einschiebbar ist,
**dadurch gekennzeichnet,**
**dass** der Behälter (3) eine entnehmbare Frontwand (6) aufweist.

2. Vierkantreibe nach Anspruch 1,
**dadurch gekennzeichnet,**
**dass** der Behälter (3) aus Kunststoff ausgebildet ist und einen stirnseitigen Griff (8) zum Herausziehen aus dem Reibkörper (20) aufweist.

3. Vierkantreibe nach Anspruch 1 oder 2,
**dadurch gekennzeichnet,**
**dass** der Reibkörper (20) eine Rastkontur (11) und der Behälter (3) eine damit zusammenwirkende und lösbare Rasteinrichtung (10) aufweisen.

4. Vierkantreibe nach einem der Ansprüche 2 oder 3,
**dadurch gekennzeichnet,**
- **dass** der Reibkörper (20) längsendseitig eine umlaufende Einfassung (14) aus rutschhemmendem Material aufweist, so dass die Vierkantreibe (1) im Gebrauchszustand über die Einfassung (14) auf einer Unterlage (4) aufliegt, und/oder
- **dass** der Behälter (3) im Bereich seines Griffes (8) eine Auflagekontur (15) aus rutschhemmendem Material aufweist, so dass der Behälter (3) im Gebrauchszustand über die Auflagekontur (15) auf der Unterlage (4) aufliegt.

5. Vierkantreibe nach Anspruch 4,
**dadurch gekennzeichnet,**
**dass** die Einfassung (14) und/oder die Auflagekontur (15) aus Kunststoff, insbesondere aus Silikon oder einem thermoplastischen Elastomer (TPE), ausgebildet sind/ist.

6. Vierkantreibe nach einem der Ansprüche 2 bis 5,
**dadurch gekennzeichnet,**
**dass** der Reibkörper (20) und der zugehörige Behälter (3) eine konische Form aufweisen, wobei sich der Behälter (3) vom Griff (8) zur Frontwand (6) hin verjüngt.

7. Vierkantreibe nach einem der Ansprüche 1 bis 6,
**dadurch gekennzeichnet,**
- **dass** die Reibfläche (2a,2b,2c,2d) zumindest teilweise aus Metall, insbesondere aus Edelstahl, ausgebildet ist, oder
- **dass** die Reibfläche (2a,2b,2c,2d) aus Keramik ausgebildet oder mit Keramik beschichtet ist.

8. Vierkantreibe nach einem der Ansprüche 1 bis 7,
**dadurch gekennzeichnet,**
**dass** der Behälter (3) zumindest in zwei Seitenwänden (16) jeweils eine Nut (18) aufweist, in welchen die Frontwand (6) geführt ist.

9. Vierkantreibe nach einem der Ansprüche 1 bis 8,
**dadurch gekennzeichnet,**
**dass** alle Reibflächen (2a,2b,2c,2d) ein unterschiedliches Reibbild aufweisen.

10. Vierkantreibe nach einem der Ansprüche 1 bis 9,
**dadurch gekennzeichnet,**
**dass** die Frontwand (6) an zumindest einem Außenrand eine Abziehlippe (19) aufweist, die insbesondere einstückig mit der Frontwand (6) hergestellt oder an diese angespritzt ist.

## Claims

1. Box grater (1)
- with a grating body (20) with at least four grating surfaces (2a, 2b, 2c, 2d) aligned substantially orthogonally to each other to grate products to be grated, in particular foodstuffs, such as for example cheese, fruit or vegetables,
- with a container (3) for collecting the grated products,
- wherein the grating body (20) has a tubular cross-section in which the container (3) can be inserted, **characterised in that** the container (3) has a removable front wall (6).

2. Box grater according to claim 1,
**characterised in that**
the container (3) is formed from plastic and has an end face grip (8) to pull out from the grating body (20).

3. Box grater according to claim 1 or 2,
**characterised in that**
the grating body (20) has a fastening contour (11) and the container (3) has a detachable locking device (10) interacting therewith.

4. Box grater according to any one of claims 2 or 3,
**characterised in that**
- the grating body (20) has a circumferential edging (14) made from non-slip material on its longitudinal end side such that the box grater (1) rests on the base (4) with the edging (14) in the state of use, and/or
- the container (3) has, in the region of its grip (8), a contact contour (15) made from non-slip material such that the container (3) rests on the base (4) with the contact contour (15) in the state of use.

5. Box grater according to claim 4,
**characterised in that**,
the edging (14) and/or the contact contour (15) is/are formed from plastic, in particular from silicon or a thermoplastic elastomer (TPE).

6. Box grater according to any one of claims 2 to 5,
**characterised in that**,
the grating body (20) and the associated container (3) have a conical shape, wherein the container (3) tapers from the grip (8) to the front wall (6).

7. Box grater according to any one of claims 1 to 6,
**characterised in that**
- the grating surface (2a, 2b, 2c, 2d) is formed at least partially from metal, in particular from stainless steel, or
- the grating surface (2a, 2b, 2c, 2d) is formed from ceramic or is coated with ceramic.

8. Box grater according to any one of claims 1 to 7,
**characterised in that**
the container (3) has, at least each of two side walls (16), a groove (18) in which the front wall (6) is guided.

9. Box grater according to any one of claims 1 to 8,
**characterised in that**
all grating surfaces (2a, 2b, 2c, 2d) have a different grating pattern.

10. Box grater according to any one of claims 1 to 9,
**characterised in that**,
the front wall (6) has, on at least one outer edge, a levelling blade (19), which is in particular produced in one piece with the front wall (6) or injection-moulded thereon.

## Revendications

1. Râpe à quatre faces (1),
- avec un corps de râpe (20) avec au moins quatre faces de râpe (2a, 2b, 2c, 2d) orientées sensiblement perpendiculairement les unes aux autres et destinées à râper des produits à râper, en particulier des produits alimentaires, par exemple des fromages, des fruits ou des légumes,
- avec un récipient (3) pour recevoir le produit à râper,
- dans lequel le corps de râpe (20) a une section transversale en forme de tube dans laquelle le récipient (3) peut être introduit,
**caractérisée en ce que**
le récipient (3) a une paroi frontale (6) qui peut être enlevée.

2. Râpe à quatre faces selon la revendication 1,
**caractérisée en ce que**
le récipient (3) est fabriqué en matière plastique et comporte une poignée (8) côté frontal pour le sortir du corps de râpe (20).

3. Râpe à quatre faces selon la revendication 1 ou 2,
**caractérisée en ce que**
le corps de râpe (20) a un contour d'encliquetage (11) et le récipient (3) a un dispositif d'encliquetage (10) coopérant avec celui-ci et amovible.

4. Râpe à quatre faces selon l'une quelconque des revendications 2 ou 3,
**caractérisée en ce que**
- le corps de râpe (20) comporte, du côté de son extrémité longitudinale, une bordure périphérique (14) en un matériau antidérapant de telle sorte que, lorsqu'elle est utilisée, la râpe à quatre faces (1) repose par l'intermédiaire de sa bordure (14) sur un support (4), et/ou
- le récipient (3) comporte dans la zone de sa poignée (8) un contour d'appui (15) en un matériau antidérapant de telle sorte que, lorsqu'il est utilisé, le récipient (3) repose par l'intermédiaire du contour d'appui (15) sur le support (4).

5. Râpe à quatre faces selon la revendication 4,
**caractérisée en ce que**
la bordure (14) et/ou le contour d'appui (15) sont fabriqués en matière plastique, en particulier en silicone ou en un élastomère thermoplastique (TPE).

6. Râpe à quatre faces selon l'une quelconque des revendications 2 à 5,
**caractérisée en ce que**
le corps de râpe (20) et le récipient (3) associé ont une forme conique, le récipient (3) se rétrécissant de la poignée (8) à la paroi frontale (6).

7. Râpe à quatre faces selon l'une quelconque des revendications 1 à 6,
**caractérisée en ce que**
- la face de râpe (2a, 2b, 2c, 2d) est fabriquée au moins partiellement en métal, en particulier en acier spécial, ou
- la face de râpe (2a, 2b, 2c, 2d) est fabriquée en céramique ou est revêtue de céramique.

8. Râpe à quatre faces selon l'une quelconque des revendications 1 à 7,
**caractérisée en ce que**
le récipient (3) comporte, au moins dans deux parois latérales (16), à chaque fois une rainure (18) dans laquelle la paroi frontale (6) est guidée.

9. Râpe à quatre faces selon l'une quelconque des revendications 1 à 8,
**caractérisée en ce que**
toutes les faces de râpe (2a, 2b, 2c, 2d) ont une forme de râpe différente.

10. Râpe à quatre faces selon l'une quelconque des revendications 1 à 9,
**caractérisée en ce que**
la paroi frontale (6) comporte sur au moins un bord extérieur une lèvre de retrait (19) qui est fabriquée en particulier d'une seule pièce avec la paroi frontale (6) ou qui est injectée sur celle-ci.
